# EUROPEAN PATENT SPECIFICATION

(11) **EP 2 222 456 B1**
(45) Date of publication and mention of the grant of the patent: **02.07.2014**
(21) Application number: 08860690.0
(22) Date of filing: 11.12.2008
(51) Int. Cl.: B32B 27/30, B32B 27/36, B29C 47/00, B29C 47/06, B29K 23/00, B29K 33/00, B29K 67/00, B29K 105/00, B29L 9/00, B29C 55/02, B29C 55/14, B29C 55/16

(54) **PROCESS TO PRODUCE BIAXIALLY ORIENTED POLYLACTIC ACID FILM AT HIGH TRANSVERSE ORIENTATION RATES**
VERFAHREN ZUR HERSTELLUNG EINER BIAXIAL ORIENTIERTEN POLYMILCHSÄUREFOLIE MIT HOHEN QUERORIENTIERUNGSRATEN
PROCÉDÉ DE PRODUCTION DE FILM À BASE D'ACIDE POLYLACTIQUE D'ORIENTATION BIAXIALE À DES TAUX D'ORIENTATION HAUTEMENT TRANVERSALE

(30) Priority: 11.12.2007 US 996923 P
(43) Date of publication of application: 01.09.2010
(73) Proprietor: Toray Plastics (America) , Inc., N. Kingstown, RI 02852-7500 (US)
(72) Inventor: LEE, Mark, S., North Kingstown, RI 02852 (US)
(74) Representative: Glawe, Delfs, Moll
(86) International application number: PCT/US2008/086450
(87) International publication number: WO 2009/076541

(56) References cited:
- EP-A1- 1 942 001
- EP-A1- 1 955 845
- WO-A1-2004/101642
- WO-A1-2005/059031
- US-A1- 2003 039 775
- US-A1- 2004 258 857
- US-A1- 2007 141 372

## Description

### Field of the Invention

This invention relates to a multi-layer biaxially oriented polylactic acid (BOPLA) film with a novel formulation which exhibits significantly improved ability to stretch in the transverse direction in a biaxial orientation process.

### Background of the Invention

Biaxially oriented polypropylene (BOPP) films used for packaging, decorative, and label applications often perform multiple functions. For example, in laminations they can provide printability, transparent or matte appearance, and/or slip properties. They can further be used to provide a surface suitable for receiving organic or inorganic coatings for gas and moisture barrier properties. They can also be used to provide a heat sealable layer for bag forming and sealing, or a layer that is suitable for receiving an adhesive either by coating or laminating.

However, in recent years, interest in "greener" packaging has been developing. Packaging materials based on biologically derived polymers are increasing due to concerns with renewable resources, raw materials, and greenhouse gases. Bio-based polymers are believed - once fully scaled-up - to help reduce reliance on petroleum, reduce production of greenhouse gases, and can be biodegradable. The biodegradable aspect is of interest to many snack manufacturers so as to provide litter abatement in addition to a lower carbon footprint package. Bio-based polymers such as polylactic acid (PLA) -- which is currently derived from corn starch (but can be derived from other plant sugars) and thus, can be considered to be derived from a renewable or sustainable resource - is one of the more popular and commercially available materials available for packaging film applications. Other bio-based polymers such as polyhydroxyalkanoates (PHA) and particularly, polyhydroxybutyrate (PHB), are also of high interest.

Unfortunately, biaxially oriented PLA (BOPLA) films have been found to be limited to relatively low orientation rates when compared to BOPP manufacturing. This has had an impact on film production productivity. Because of the nature of the polylactic acid polymer being highly polar and crystalline, to effectively make BOPLA films, orientation rates typically found with biaxially oriented polyester films, such as polyethylene terephthalate (BOPET), are used, e.g. roughly 3x in the machine direction (MD) and 3-5x in the transverse direction (TD).

If BOPLA films are oriented in the transverse direction higher than a nominal 3-5x, film breaks are very prone to happen and production of BOPLA films cannot be effectively achieved. Moreover, if sustainable transverse orientation at 3-5x is maintained, usable film width for many packaging converters and end-users become limited and can result in wasted film and less productivity. BOPLA is targeted to replace potentially BOPP in many flexible packaging applications. However, BOPP film manufacturing typically has a MD orientation rate of 4-5x and TD orientation rate of 8-10x Thus, BOPP films are produced much wider than BOPLA films and have a higher production output and customer width programming.

Currently, the typical approach to producing BOPLA films - other than building a new asset specifically for BOPLA -- has been to: 1) Utilize a modified existing BOPET film line to produce BOPLA film (these modifications may be minor since PLA orientation rates are similar to polyethylene terephthalate, although extrusion and orientation process temperatures will be quite different); or 2) Modify an existing BOPP film line, which requires significant modifications. The latter generally requires major modifications to the Transverse direction orientation (TDO) section in terms of chain rail width changes, often coupled with changes in the widths to the casting section and machine direction orientation section. Often, these mechanical changes preclude the possibility of making BOPP on such a line again and thus, a converted BOPP line must generally be dedicated to BOPLA production. BOPP film line manufacturers such as Bruckner Maschinenbau GmbH & Co. have developed products or packages to convert a BOPP line into a BOPLA line.

Similar recommendations or guidelines for converting BOPP assets to BOPLA production have been made by PLA resin manufacturers such as Natureworks®. Typical modifications involve addition of resin dryers (since PLA is hygroscopic), conversion of casting system to electrostatic pinning (similar to OPET manufacturing) and non-water bath quenching, wider die, wider cast roll and MDO rolls, reduction of TDO rail widths, and reduction of downstream web handling roller widths, pull roll widths, edge trimming, and winding if necessary. These changes in die, casting roll and MDO widths generally are needed due to the increased neck-down that PLA has compared to polypropylene during casting and MD orientation (in order to compensate for increased neck-in, a wider die is often used) and the reduction in width for TDO section is generally utilized due to the decrease in orientation rate necessary for productive manufacturing of BOPLA films.

US Patent 7,128,969 describes a film composed of a base layer of PLA with a minority component of a thermoplastic or polyolefin such as polypropylene or polyethylene, typically less than 1% by weight of the base layer. Such a formulation is particularly suitable for thermoforming or biaxial stretching by means of pneumatic drawing or other mechanical forming. However, the film is not suitable for high transverse orientation rates in excess of 6 TDX; the highest TDX cited in the examples is 5.5. In addition, the use of polyolefin additives such as polypropylene or polyethylene will cause incompatibilities with the polylactic acid polymer resulting in a hazy film appearance.

EP Patent 01385899 describes a multi-layer film design using a PLA base layer formulated with a cyclic polyolefin copolymer (COC) as a cavitating agent to produce an opaque biaxially oriented PLA film. However, this patent's examples do not show transverse orientation rates in excess of 6x; the highest shown in the examples are 5.5 TDX.

EP Patent 01385700 describes a biaxially oriented PLA film with good antistatic properties by incorporating antistatic additives such as glycerol monostearate (GMS) into the base layer of PLA. However, this patent's examples do not show transverse orientation rates in excess of 6x; the highest shown in the examples are 5.5 TDX.

US Patent 7354973 describes a polylactic acid composition of 60-97 wt % of PLA and about 3-40 wt% of an ethylene copolymer impact modifier of 20-95 wt% ethylene, 3-70 wt% of an olefin of the formula CH₂=C(R¹)CO₂R² where R¹ is hydrogen or an alkyl group with 1-8 carbon atoms and R² is an alkyl group with 1-8 carbon atoms, and 0.5-25 wt % of an olefin of the formula CH₂=C(R³)CO₂R⁴ where R³ is hydrogen or an alkyl group with 1-6 carbon atoms and R⁴ is glycidyl. This composition has been found to be suitable as a toughened composition for injection molding applications to prevent brittleness. Biaxial orientation at high orientation rates is not contemplated.

US Patent 7368160 describes biaxially oriented multilayer coextruded polylactic acid films with a PLA skin layer containing 0.05-0.6% of crosslinked polymer antiblock particles. The BOPLA of this film's examples is transverse oriented only at 3x and the maximum transverse orientation contemplated is up to 6x.

### Brief Summary of the Invention

The described embodiments provide a multi-layer biaxially oriented polylactic acid (BOPLA) film with a novel formulation that exhibits significantly improved ability to stretch in the transverse direction in a biaxial orientation process. The films include specific processing aids as a minority component, which enable the BOPLA film to be oriented in the transverse direction at much higher rates than previously achieved while maintaining good productivity. This allows the opportunity and possibility of producing BOPLA films on BOPP (biaxially oriented polypropylene) film manufacturing assets without incurring major and typically permanent modifications to such assets for BOPLA manufacturing.

Also provided are methods and films for achieving high transverse direction orientation rates that improve processability, productivity, and cost of BOPLA films without significantly affecting haze or appearance of the BOPLA film. The methods may produce BOPLA film at transverse direction orientation rates near or the same as BOPP transverse orientation rates so as to improve the productivity of BOPLA film production and allow for the utilization of BOPP film-making assets in making BOPLA films without substantial changes to the line.

The invention is as defined in the appended claims.

One embodiment is a multi-layer laminate film including a first layer of a heat sealable resin including an amorphous PLA resin and a second layer of a crystalline PLA resin-containing blend on one side of said sealable amorphous PLA layer. This second crystalline PLA resin-containing blend layer may be considered a core or base layer to provide the bulk strength of the laminate film. The second PLA core layer includes a blend of crystalline PLA homopolymer combined with an amount of ethylene-acrylate copolymer that acts as a processing aid to enable high transverse orientation rates of 8-11x. According to the invention, the core comprises at least 50 wt% polylactic acid.

The second PLA core layer may also include an optional amount of amorphous PLA blended with the crystalline PLA and the ethylene-methacrylate copolymer. The first heat sealable layer includes an amorphous PLA resin which provides heat sealable properties to the laminate and also may include various additives such as antiblock particles to allow for easier film handling. Furthermore, the laminate may further include a third PLA resin-containing layer on the second PLA resin-containing core layer opposite the side with the amorphous PLA sealable layer for use as a printing layer or metal receiving layer or coating receiving layer. This third layer of this laminate can include an amorphous PLA, a crystalline PLA, or blends thereof.

Preferably, the second PLA resin-containing core layer includes a crystalline polylactic acid homopolymer of about 90-100 wt% L-lactic acid units (or 0-10 wt% D-lactic acid units). This layer may include, in some embodiments, at least 40 wt.% crystalline PLA, at least 50wt.% crystalline PLA, at least, 70% wt.% crystalline PLA, or at least 90wt.% crystalline PLA. An optional amount of amorphous PLA may also be blended in with the crystalline PLA from 0-48 wt % of the core layer. The amorphous PLA is also based on L-lactic acid units but has greater than 10 wt % D-lactic acid units and/or meso-lactide units (which includes one each of L and D lactic acid residuals). The ethylene-acrylate copolymer component of the core layer formulation is from about 2-10 wt% of the core layer. Preferably, this layer includes at least 2 wt%. etheylene-acrylate.

If no third layer is coextruded with the core layer, it is also contemplated to add to the core layer antiblock particles of suitable size, selected from the group consisting of amorphous silicas, aluminosilicates, sodium calcium aluminum silicates, crosslinked silicone polymers, and polymethylmethacrylates to aid in machinability and winding. Suitable amounts range from 0.03-0.5% by weight of the core layer and typical particle sizes of 3.0 - 6.0 µm in diameter. Migratory slip additives may also be utilized to control COF properties such as fatty amides (e.g. erucamide, stearamide, oleamide, etc.) or silicone oils ranging from low molecular weight oils to ultra high molecular weight gels. Suitable amounts of slip additives to use can range from 300 ppm to 10,000 ppm of the layer.

Preferably, the first PLA heat sealable resin-containing layer includes an amorphous PLA of greater than 10 wt% D-lactic acid units. This layer may, in some embodiments, include at least 40wt.% amorphous PLA, 50wt.% amorphous PLA, at least, 70% wt.% amorphous PLA, or at least 90wt.% amorphous PLA. It is not necessary to use any of the impact modifier/process aid ethylene-acrylate copolymer in this case, as the amorphous PLA can be oriented relatively easily. This first heat sealable amorphous PLA resin-containing layer can also include an antiblock component selected from the group consisting of amorphous silicas, aluminosilicates, sodium calcium aluminum silicates, crosslinked silicone polymers, and polymethylmethacrylates to aid in machinability and winding and to lower coefficient of friction (COF) properties. Suitable amounts range from 0.03-0.5% by weight of the core layer and typical particle sizes of 3.0 - 6.0 µm in diameter, depending on the final thickness of this layer. Migratory slip additives may also be utilized to control COF properties such as fatty amides (e.g. erucamide, stearamide, oleamide, etc.) or silicone oils ranging from low molecular weight oils to ultra high molecular weight gels. Suitable amounts of slip additives to use can range from 300 ppm to 10,000 ppm of the layer.

Another embodiment may have this first PLA resin-containing layer including a non-heat-sealable amorphous PLA such as a crystalline PLA resin similar to that used in the second PLA resin-containing core layer. In addition, various blends of amorphous and crystalline PLA can be utilized at similar ratios as described for the core layer. In the case that a crystalline PLA is used or a blend including crystalline PLA, an amount of the ethylene-acrylate copolymer process aid should be used, again in the amount of 2-10 wt% of this layer to enable transverse orientation at high rates. Preferably, this layer will also contain antiblock particles selected from the group consisting of amorphous silicas, aluminosilicates, sodium calcium aluminum silicates, crosslinked silicone polymers, and polymethylmethacrylates to aid in machinability and winding. Suitable amounts range from 0.03-0.5% by weight of the core layer and typical particle sizes of 3.0 - 6.0 µm in diameter, depending on the final thickness of this layer. Migratory slip additives may also be utilized to control COF properties such as fatty amides (e.g. erucamide, stearamide, oleamide, etc.) or silicone oils ranging from low molecular weight oils to ultra high molecular weight gels, or blends of fatty amides and silicone oil-based materials. Suitable amounts of slip additives to use can range from 300 ppm to 10,000 ppm of the layer.

Preferably, the optional third PLA resin-containing layer includes an amorphous PLA, a crystalline PLA, or blends thereof. In the case where crystalline PLA is employed, an amount of the ethylene-acrylate copolymer process aid may be used, again in the amount of 2-10 wt% of this layer to aid in enabling high transverse orientation rates. Preferably, this layer will also contain antiblock particles selected from the group consisting of amorphous silicas, aluminosilicates, sodium calcium aluminum silicates, crosslinked silicone polymers, and polymethylmethacrylates to aid in machinability and winding. Suitable amounts range from 0.03-0.5% by weight of the core layer and typical particle sizes of 3.0 - 6.0 µm in diameter, depending on the final thickness of this layer. Preferably, the third polyolefin layer is a discharge-treated layer having a surface for lamination, metallizing, printing, or coating with adhesives or inks.

In the case where the above embodiments are to be used as a substrate for vacuum deposition metallizing, it is recommended that migratory slip additives not be used as these types of materials may adversely affect the metal adhesion or metallized gas barrier properties of the metallized BOPLA film. It is thought that as the hot metal vapor condenses on the film substrate, such fatty amides or silicone oils on the surface of the film may vaporize and cause pin-holing of the metal-deposited layer, thus compromising gas barrier properties. Thus, only non-migratory antiblock materials should be used to control COF and web-handling.

In the case where the above embodiments are to be used as a printing film, it may be advisable to avoid the use of silicone oils, in particular low molecular weight oils, as these may interfere with the print quality of certain ink systems used in process printing applications. However, this depends greatly upon the ink system and printing process used.

For these multi-layer film structures described above, it is preferable to discharge-treat the side of this multi-layer film structure opposite the heat sealable first layer for lamination, metallizing, printing, or coating. In the case of a 2-layer laminate structure wherein the amorphous PLA sealable layer is contiguous with a crystalline PLA core layer, it is preferable to discharge-treat the side of the core layer opposite the sealable layer for purposes of laminating, printing, metallizing, coating, etc. In the case of a 3-layer laminate structure, it is preferable to discharge-treat the side of the third layer which is contiguous to the side of the core layer opposite the heat sealable first layer. This third layer, as mentioned previously, is often formulated with materials that are conducive to receiving printing inks, metallizing, adhesives, or coatings.

Discharge-treatment in the above embodiments can be accomplished by several means, including but not limited to corona, flame, plasma, or corona in a controlled atmosphere of selected gases. Preferably, in one variation, the discharge-treated surface has a corona discharge-treated surface formed in an atmosphere of CO₂ and N₂ to the exclusion of O₂. The laminate film embodiments may further include a vacuum-deposited metal layer on the discharge-treated layer's surface. Preferably, the metal layer has a thickness of about 5 to 100 nm, has an optical density of about 1.5 to 5.0, and includes aluminum, although other metals can be utilized such as titanium, vanadium, chromium, manganese, iron, cobalt, nickel, copper, zinc, gold, or palladium, or alloys or blends thereof.

Preferably, the laminate film is produced via coextrusion of the heat sealable layer and the blended core layer and other layers if desired, through a compositing die whereupon the molten multilayer film structure is quenched upon a chilled casting roll system or casting roll and water bath system and subsequently oriented in the machine and/or transverse direction into an oriented multi-layer film. Machine direction orientation rate is typically 2.0-3.0 x and transverse direction orientation - with the use of the ethylene-acrylate impact modifier process aid - is typically 8.0-11.0x. Heat setting conditions in the TDO oven is also critical to minimize thermal shrinkage effects.

All these examples can also be metallized via vapor-deposition, preferably a vapor-deposited aluminum layer, with an optical density of at least about 1.5, preferably with an optical density of about 2.0 to 4.0, and even more preferably between 2.3 and 3.2.

Optionally, an additional third layer specifically formulated for metallizing to provide adequate metal adhesion, metal gloss, and gas barrier properties can be disposed on the second PLA resin-containing core layer, opposite the side with the heat sealable layer. Additionally, this additional layer's surface may also be modified with a discharge treatment to make it suitable for metallizing, laminating, printing, or converter applied adhesives or other coatings.

This invention provides a method to allow the transverse orientation of BOPLA films at high orientation rates in excess of 6 TDX (transverse direction orientation rate) and typically in the range of 8-11 TDX, similar to BOPP transverse direction orientation rates. This is significantly higher than what has been achieved in prior arts. Such a film composition can result in biaxially oriented PLA films that are more economical than the current art for BOPLA and can enable the use of BOPP assets to make BOPLA films without significant capital expense and modifications.

### Brief Description of the Drawings

Fig. 1A is a graph showing stress versus drawing ratio for the films of Comparative Example 1, Example 1, and Example 2.
Fig. 1B is a graph showing stress versus drawing ratio for the films of Comparative Example 1 and Example 1 at different drawing temperatures.
Fig. 2 is a transmission microscopy image of a cast film including crystalline PLA and ethylene-acrylate copolymer dry-blended together and shows that the ethylene-acrylate copolymer exists as domains within the PLA.
Fig. 3 is a drawing of an ethylene-acrylate copolymer forming a quasi-network between the acrylate groups and PLA.

### Detailed Description of the Invention

The above issues of making high transverse oriented BOPLA films in an efficient manner with good processability and without requiring extensive retro-fitting of BOPP film-making assets are addressed. Embodiments include a BOPLA film formulation suitable for high transverse orientations and can allow a BOPP film-making asset to run alternately between BOPLA and BOPP films. This can be very useful to a BOPP film manufacturer as the nascent growth of BOPLA films in flexible packaging can still be very small volume and may not support the capital costs to convert a BOPP line into a dedicated BOPLA line. Thus, the BOPP film manufacturer may have the flexibility to produce either BOPP or BOPLA on the same asset as required. Accordingly, as BOPLA films become more popular and mainstream, such a line can relatively easily transition to such a product from BOPP.

Formulations for BOPLA films that can be oriented on a BOPP asset at similar transverse orientation rates as BOPP are also provided. The formulations address the above issues of making high transverse direction oriented OPLA films to improve processability and productivity without incurring potential appearance issues such as high haze or gels due to incompatible additives. The formulations balance the attributes of using bio-based polymers from a renewable resource and processability by using an ethylene-acrylate copolymer as a processing aid. This processing aid is also a polar polymer and thus has good compatibility with the PLA polymer and results in a clear, transparent film.

In one embodiment, the laminate film includes a 2-layer coextruded film of: A mixed PLA resin core layer including a crystalline polylactic acid polymer, optionally blended with an amount of an amorphous PLA polymer, and an amount of ethylene-acrylate copolymer; and a heat sealable layer including an amorphous polylactic acid polymer; and the side of the crystalline PLA core layer blend opposite the sealable resin layer is discharge-treated.

Another embodiment of the laminate film includes a similar construction as above, except that a third PLA skin layer may be disposed on the side of the crystalline PLA/ethylene-acrylate core layer blend opposite the heat sealable amorphous PLA layer. This third PLA layer can include either crystalline PLA resin or amorphous PLA resin or blends thereof. In the case where crystalline PLA resin is part of this layer's formulation, an amount of ethylene-acrylate copolymer is incorporated as in the core layer formulation. Generally, it is desirable to discharge-treat the exposed surface of this third layer in order to provide further functionality as a surface to receive metallization, printing, coating, or laminating adhesives.

The polylactic acid resin core layer is a crystalline polylactic acid of a specific optical isomer content and can be biaxially oriented. As described in US Patent 6005068, lactic acid has two optical isomers: L-lactic acid (also known as (S)-lactic acid) and D-lactic acid (also known as (R)-lactic acid). Three forms of lactide can be derived from these lactic acid isomers: L,L-lactide (also known as L-lactide) and which includes two L-lactic acid residuals; D,D-lactide (also known as D-lactide) and which includes two D-lactic acid residuals; and meso-lactide which includes one each of L and D-lactic acid residuals. The degree of crystallinity is determined by relatively long sequences of a particular residual, either long sequences of L or of D-lactic acid. The length of interrupting sequences is important for establishing the degree of crystallinity (or amorphous) and other polymer features such as crystallization rate, melting point, or melt processability.

The crystalline polylactic acid resin is preferably one including primarily of the L-lactide isomer with minority amounts of either D-lactide or meso-lactide or combinations of D-lactide and meso-lactide. Preferably, the minority amount is D-lactide and the amount of D-lactide is 10 wt% or less of the crystalline PLA polymer. More preferably, the amount of D-lactide is less than about 5 wt%, and even more preferably, less than about 2 wt%. Suitable examples of crystalline PLA are Natureworks® Ingeo™ 4042D and 4032D. These resins have relative viscosity of about 3.9-4.1, a melting point of about 165-173°C, a crystallization temperature of about 100 -120°C, a glass transition temperature of about 55-62°C, a D-lactide content of about 4.25 wt% and 1.40 wt% respectively, density of about 1.25 g/cm³, and a maximum residual lactide in the polylactide polymer of about 0.30% as determined by gas chromatography. Molecular weight M_{w} is typically about 200,000; Mₙ typically about 100,000; polydispersity about 2.0. Natureworks® 4032D is the more preferred crystalline PLA resin, being more crystalline than 4042D and more suitable for high heat biaxial orientation conditions. In addition, the 4042D PLA grade contains about 1000ppm of erucamide and for some applications, particularly for gas barrier metallizing, may not be suitable.

The core resin layer is typically 8 µm to 100 µm in thickness after biaxial orientation, preferably between 10 µm and 50 µm, and more preferably between about 15 µm and 25 µm in thickness. A preferred embodiment is to use the higher crystalline, higher L-lactide content PLA (lower wt% D-lactide of about 1.40) such as Natureworks® 4032D.

The core layer can also optionally include an amount of amorphous PLA resin to improve further extrusion processing and oriented film processing. The addition of amorphous PLA in the core layer helps to lower extrusion polymer pressure and in terms of film manufacturing, helps to reduce or slow crystallization rate of the newly oriented film. This aids in the orientation of the PLA film in both MD and TD and helps reduce defects such as uneven stretch marks. It also helps with the slitting of the biaxially oriented film at the edge-trimming section of the line by reducing the brittleness of the edge trim and reducing the instances of edge trim breaks which can be an obstacle to good productivity.

The amorphous PLA is preferably based on a L-lactide isomer with D-lactide content of greater than 10 wt%. A suitable amorphous PLA to use is Natureworks® Ingeo™ 4060D grade. This resin has a relative viscosity of about 3.25-3.75, T_{g} of about 52-58°C, seal initiation temperature of about 80°C, density of about 1.24 g/cm³, a D-lactide content of about 12 wt%, and a maximum residual lactide in the polylactide polymer of about 0.30% as determined by gas chromatography. Molecular weight M_{w} is about 180,000. Suitable amounts of amorphous PLA to use in the core are concentrations of up to about 48 wt% of the core layer, preferably up to about 30 wt% of the core layer, and even more preferably about 15 wt% of the core layer. It should be noted, however, that too much amorphous PLA in the core layer (e.g. 50% or greater) can cause high thermal shrinkage rates after biaxial orientation and in spite of heat-setting conditions in the transverse orientation oven to make a thermally stable film. A thermally, dimensionally stable film is important if the substrate is to be used as a metallizing, printing, coating, or laminating substrate. (However, if the BOPLA is desired as a shrinkable film, this composition and appropriate processing conditions might be suitable.)

A minority amount of ethylene-acrylate copolymer is blended into the core layer to enable high transverse orientation rates similar to that used in BOPP orientation. Acrylates are of the general chemical formula of CH₂=C(R¹)CO₂R² where R¹ can be hydrogen or an alkyl group of 1-8 carbon atoms and R² is an alkyl group of 1-8 carbon atoms. Ethylene-acrylate copolymers that may be used can be based on ethylene-acrylate, ethylene-methacrylate, ethylene-n-butyl acrylate-glycidyl methacrylate, ethylene-glycidyl methacrylate, ethylene-butyl-acrylate, ethylene acrylic esters, or blends thereof. Ethylene vinyl acetate (EVA) and ethylene methacrylate (EMA) can also be utilized. Other similar materials may also be utilized. As described in US Patent 7354973, suitable compositions of the ethylene-acrylate copolymers can be about 20-95 wt% ethylene content copolymerized with about 3-70 wt% n-butyl acrylate and about 0.5-25 wt% glycidyl methacrylate monomers. A particularly suitable ethylene-acrylate copolymer of this type is one produced by E. I. DuPont de Nemours and Company Packaging and Industrial Polymers Biomax® Strong 120. This additive has a density of about 0.94 g/cm³, a melt flow rate of about 12 g/10minutes at 190°C/2.16 kg weight, a melting point of about 72°C, and a glass transition temperature of about -55°C. Other suitable ethylene-acrylate copolymer impact modifiers commercially available are: DuPont Elvaloy® PTW, Rohm & Haas, Inc. BPM500, and Arkema, Inc. Biostrength® 130.

Suitable amounts of ethylene-acrylate copolymer to be blended in the crystalline PLA containing core layer is from 2-10 wt% of the core layer, preferably 2-7 wt% and more preferably, 3-5 wt%. At these concentrations, acceptable clarity of the biaxially oriented film is maintained. Too much ethylene-acrylate may cause haziness; too little may not enable transverse orientation at 8-10x Blending into the core layer can be done most efficiently by diy-blending the respective resin pellets; more aggressive blending such as melt-compounding via single-screw or twin-screw can result in better dispersion of the ethylene-acrylate copolymer throughout the PLA matrix.

In the embodiment of a 2-layer coextruded multilayer film, the core resin layer can be surface treated on the side opposite the skin layer with either an electrical corona-discharge treatment method, flame treatment, atmospheric plasma, or corona discharge in a controlled atmosphere of nitrogen, carbon dioxide, or a mixture thereof, with oxygen excluded and its presence minimized. The latter method of corona treatment in a controlled atmosphere of a mixture of nitrogen and carbon dioxide is particularly preferred. This method results in a treated surface that includes nitrogen-bearing functional groups, preferably at least 0.3 atomic% or more, and more preferably, at least 0.5 atomic% or more. This treated core layer is then well suited for subsequent purposes of metallizing, printing, coating, or laminating.

In this embodiment of a 2-layer laminate film, it is often desirable to add an optional amount of antiblocking agent to the core layer for aiding machinability and winding. An amount of an inorganic antiblock agent can be added in the amount of 100-1000 ppm of the core resin layer, preferably 300-600 ppm. Preferred types of antiblock are spherical sodium aluminum calcium silicates or an amorphous silica of nominal 6 µm average particle diameter, but other suitable spherical inorganic antiblocks can be used including crosslinked silicone polymer or polymethylmethacrylate, and ranging in size from 2 µm to 6 µm. Migratory slip agents such as fatty amides and/or silicone oils can also be optionally employed in the core layer either with or without the inorganic antiblocking additives to aid further with controlling coefficient of friction and web handling issues. Suitable types of fatty amides are those such as stearamide or erucamide and similar types, in amounts of 100-1000ppm of the core. Preferably, stearamide is used at 400-600ppm of the core layer. A suitable silicone oil that can be used is a low molecular weight oil of 350 centistokes which blooms to the surface readily at a loading of 400-600ppm of the core layer. However, if the films are desired to be used for metallizing or high definition process printing, it is recommended that the use of migratory slip additives be avoided in order to maintain metallized barrier properties and adhesion or to maintain high printing quality in terms of ink adhesion and reduced ink dot gain.

The coextruded skin layer can be a heat sealable resin layer including an amorphous polylactic acid polymer. As described earlier, the amorphous PLA is preferably based on a L-lactide isomer with D-lactide content of greater than 10 wt%. A suitable amorphous PLA to use is Natureworks® Ingeo™ 4060D grade. This resin has a relative viscosity of about 3.25-3.75, T_{g} of about 52-58°C, seal initiation temperature of about 80°C, density of about 1.24 g/cm³, a D-lactide content of about 12 wt%, and a maximum residual lactide in the polylactide polymer of about 0.30% as determined by gas chromatography. Molecular weight M_{w} is about 180,000. The preferred amount to be used as a heat sealable skin layer is about 100 wt% of the layer. It is also preferred to add an amount of inorganic antiblock to this layer to aid in web-handling, COF control, film winding, and static control, among other properties. Suitable amounts would be about 1000-5000 ppm of the heat sealable resin layer, preferably 3000-5000 ppm.

Preferred types of antiblock are spherical crosslinked silicone polymer such as Toshiba Silicone's Tospearl® grades of polymethlysilsesquioxane of nominal 2.0 and 3.0 µm sizes. Alternatively, sodium aluminum calcium silicates of nominal 3 µm in diameter can also be used (such as Mizusawa Silton® JC-30), but other suitable spherical inorganic antiblocks can be used including polymethylmethacrylate, silicas, and silicates, and ranging in size from 2 µm to 6 µm. Migratory slip agents such as fatty amides or silicone oils can also be optionally added to the heat seal resin layer of types and quantities mentioned previously if lower COF is desired. However, if the films are desired to be used for metallizing or high definition process printing, it is recommended that the use of migratory slip additives be avoided or minimized in order to maintain metallized barrier properties and metal adhesion or to maintain high printing quality in terms of ink adhesion and reduced ink dot gain.

The heat sealable resin layer can be coextruded on one side of the core layer, said heat sealable layer having a thickness after biaxial orientation of between 0.5 and 5 µm, preferably between 1.0 and 2.0 µm. The core layer thickness can be of any desired thickness after biaxial orientation, but preferred and useful thicknesses are in the range of 10 µm to 100 µm, preferably 13.5 µm to 25 µm, and even more preferably 15.0 µm - 20.0 µm. The coextrusion process includes a multi-layered compositing die, such as a two- or three-layer die. In the case of a 2-layer coextruded film, a two-layer compositing die can be used. In the case of a 3-layer coextruded film, the polymer blend core layer can be sandwiched between the heat sealable resin layer and a third layer using a three-layer compositing die.

One embodiment is to coextrude in only two layers with only the blended core layer and the heat sealable layer coextruded on one side of the core layer. In this case, the core layer side opposite the heat sealable layer can be further modified by adding inorganic antiblock particles into the core layer itself and can also be surface-treated via a discharge-treatment method if so desired. In a three-layer coextruded film embodiment, this third layer on the side of the core layer opposite the heat sealable layer can also be modified with antiblock particles in lieu of the core layer and also be surface-treated via a discharge-treatment method as desired. Selection of the said third layer can include any polymer typically compatible with the core layer resin such as a crystalline PLA resin, amorphous PLA resin, or blends thereof. Typically, selection of this third layer's formulation is to enhance the coextruded film's printability, appearance, metallizability, winding, laminating, sealability, or other useful characteristics. Useful thickness of this third layer after biaxial orientation can be similar to the thicknesses cited for the heat sealable skin layer, namely, preferably 1.0-2.0 µm.

The surface opposite the heat sealable layer can be surface-treated if desired with either a corona-discharge method, flame treatment, atmospheric plasma, or corona discharge in a controlled atmosphere of nitrogen, carbon dioxide, or a mixture thereof which excludes oxygen. The latter treatment method in a mixture of CO and N₂ only is preferred. This method of discharge treatment results in a treated surface that includes nitrogen-bearing functional groups, preferably 0.3% or more nitrogen in atomic %, and more preferably 0.5% or more nitrogen in atomic %. This discharge-treated surface can then be metallized, printed, coated, or extrusion or adhesive laminated. Preferably, it is printed or metallized, and more preferably, metallized.

If a three-layer coextruded film embodiment is chosen, a third layer may be coextruded with the core layer opposite the heat sealable resin layer, having a thickness after biaxial orientation between 0.5 and 5 µm, preferably between 0.5 and 3 µm, and more preferably between 1.0 and 2.0 µm. A suitable material for this layer is a crystalline PLA or amorphous PLA or blends thereof, as described earlier in the description. If amorphous PLA is used, the same suitable resin grade used for the heat sealable layer may be employed (e.g. Natureworks® 4060D). If crystalline PLA is used, the same suitable grades as used for the core layer may be employed such as Natureworks® 4042D or 4032D, with the 4032D grade preferred in general.

Additionally, blends of both crystalline and amorphous PLA may be utilized for this layer, similar to previously described formulations for the core layer, but not limited to those descriptions. For example, the ratio of amorphous PLA to crystalline PLA for this third skin layer can range from 0-100 wt% amorphous PLA and 100-0 wt% crystalline PLA. In those embodiments in which crystalline PLA is used in the third layer, an amount of ethylene-acrylate copolymer should be used as described previously, in order to ensure the ability to transversely orient this layer at high orientation rates. Suitable amounts of ethylene-acrylate copolymer to use in this skin layer is 2-10 wt%, preferably 2-7 wt% and, more preferably, 3-5 wt%. The use of various blends of amorphous and crystalline PLA in this layer may make it more suitable for printing, metallizing, coating, or laminating, and the exact ratio of the blend can be optimized for these different applications.

This third layer may also contain an anti-blocking agent and/or slip additives for good machinability and a low coefficient of friction in about 0.01 - 0.5% by weight of the third layer, preferably about 250 - 1000 ppm. Preferably, non-migratory inorganic slip and/or antiblock additives as described previously should be used to maintain gas barrier properties and metal adhesion if metallizing, or ink wetting and ink adhesion if printing.

In addition, another embodiment that can replace the heat sealable amorphous PLA layer with a non-sealable PLA layer. In this variation, amorphous or crystalline PLA may be used, or blends thereof. In the case of making this layer non-sealable, preferably crystalline PLA should be used, either by itself or as the majority component of a blend with amorphous PLA. As discussed previously, if crystalline PLA is used for this layer, an amount of ethylene-acrylate copolymer should be used as part of this layer to aid high transverse orientation rates. Suitable amounts of ethylene-acrylate copolymer to use in this skin layer are 2-10 wt%, preferably 2-7 wt% and, more preferably, 3-5 wt%.

Preferably, non-migratory inorganic slip and/or antiblock additives as described previously are used to maintain gas barrier properties and metal adhesion if metallizing, or ink wetting and ink adhesion if printing. It is also preferred to add an amount of inorganic antiblock to this layer to aid in web-handling, COF control, film winding, and static control, among other properties. Suitable amounts would be about 1000-5000 ppm of the this non-eat sealable resin layer, preferably 3000-5000 ppm. Preferred types of antiblock are spherical crosslinked silicone polymer such as Toshiba Silicone's Tospearl® grades of polymethlysilsesquioxane of nominal 2.0 and 3.0 µm sizes. Alternatively, sodium aluminum calcium silicates of nominal 3 µm in diameter can also be used (such as Mizusawa Silton® JC-30), but other suitable spherical inorganic antiblocks can be used including polymethylmethacrylate, silicas, and silicates, and ranging in size from 2 µm to 6 µm. It is often preferred to discharge-treat the exposed side of this layer so as to enable adequate adhesion and wet-out of adhesives or inks or coatings to this side. In particular, cold seal latexes can be applied to this discharge-treat surface.

The multilayer coextruded film can be made either by sequential biaxial orientation or simultaneous biaxial orientation which is a well-known processes in the art. The multilayer coextruded laminate sheet is coextruded at melt temperatures of about 190°C to 215°C and cast and pinned -- using electrostatic pinning -- onto a cooling drum whose surface temperature is controlled between 15 °C and 26°C to solidify the non-oriented laminate sheet at a casting speed of about 6 mpm. If sequential biaxial orientation is used, the non-oriented laminate sheet is stretched first in the longitudinal direction at about 40°C to 65°C at a stretching ratio of about 2 to about 4 times the original length, preferably about 3.0 times, using differentially heated and sped rollers and the resulting stretched sheet is heat-set at about 40-45°C on annealing rollers and cooled at about 25-40°C on cooling rollers to obtain a uniaxially oriented laminate sheet. The uniaxially oriented laminate sheet is then introduced into a tenter at a linespeed of about 18-50 mpm and preliminarily heated between 65°C and 75°C, and stretched in the transverse direction at a temperature of about 75-105°C and at a stretching ratio of about 7 to about 12 times, preferably 8-10 times, the original length and then heat-set or annealed at about 115-145°C to reduce internal stresses due to the orientation and minimize shrinkage and give a relatively thermally stable biaxially oriented sheet. TD orientation rates were adjusted by moving the transverse direction rails in or out per specified increments. The line was allowed to stabilize at the new conditions and operability determined by whether film breaks would occur over a 20 minute time span.

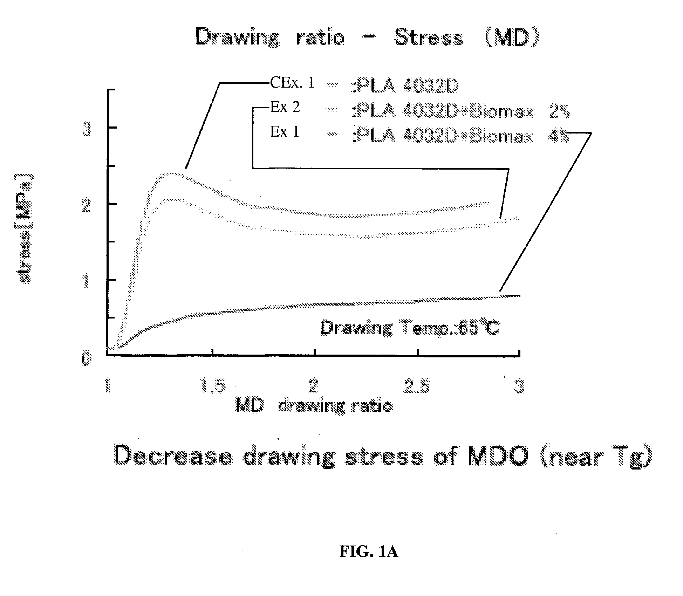

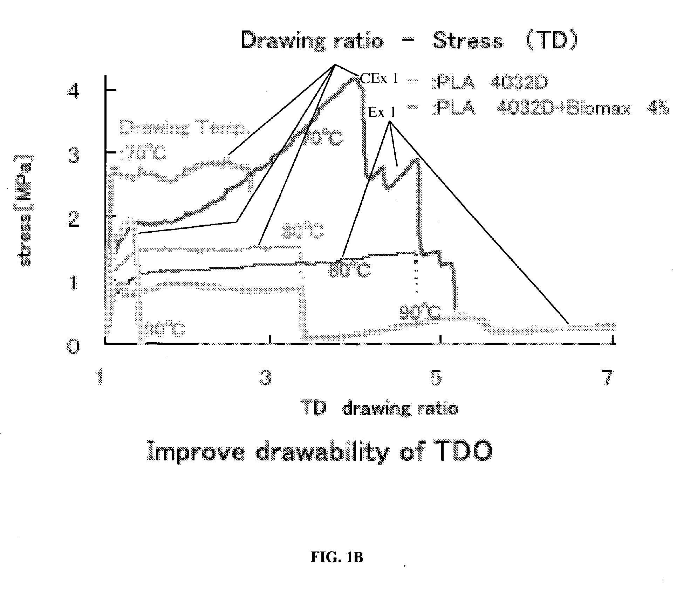

Without being bound by any theory, it appears that the ethylene-acrylate copolymer helps to decrease the drawing or orientation stress. In some fundamental controlled orientation studies, it appears that drawing stress for both machine direction and transverse direction is reduced by the incorporation of ethylene-acrylate with crystalline PLA. At different drawing temperatures, the stress to draw or orient the PLA film with ethylene-acrylate is generally less than that for PLA film alone (FIGS. 1A and 1B).

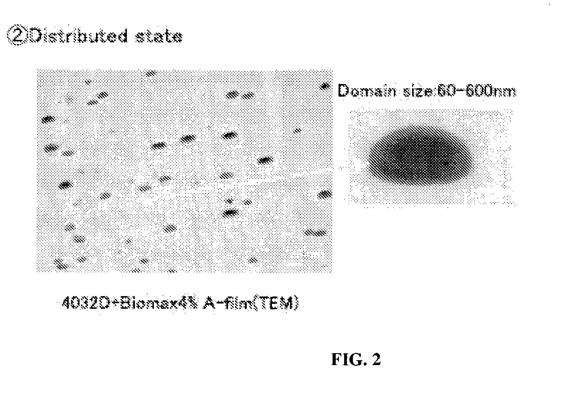

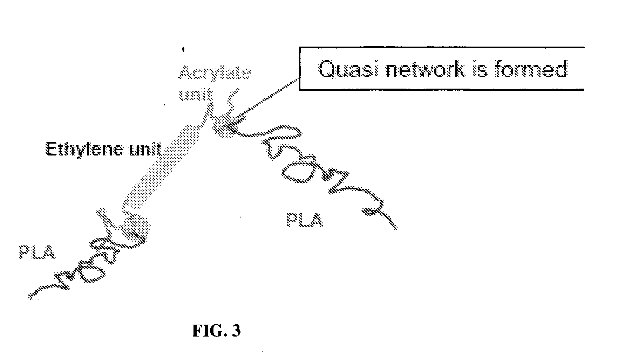

Transmission microscopy of cast films including crystalline PLA and ethylene-acrylate copolymer dry-blended together shows that the ethylene-acrylate copolymer exists as domains within the PLA; said domain size range from 60-600nm (FIG. 2). The domain size may be made smaller and better dispersed if melt-compounding by single or twin-screw processes is used to blend the PLA and ethylene-acrylate together. One hypothesis for the mechanism for ethylene-acrylate to reduce orientation stresses is that the ethylene-acrylate copolymer forms a quasi-network between the acrylate groups and the PLA (FIG. 3).

The biaxially oriented film may have a total thickness between 10 and 100 µm, preferably between 15 and 30 µm, and most preferably between 20 and 25 µm. For simultaneous orientation, the machine direction and transverse direction stretching are done simultaneously using a specially designed tenter-frame and clip and chain design which obviates the need for a machine direction orienter of driven and heated rollers.

One embodiment is to metallize the discharge-treated surface opposite the heat sealable resin layer. The unmetallized laminate sheet is first wound in a roll. The roll is placed in a vacuum metallizing chamber and the metal vapor-deposited on the discharge-treated metal receiving layer surface. The metal film may include titanium, vanadium, chromium, manganese, iron, cobalt, nickel, copper, zinc, aluminum, gold, or palladium, the preferred being aluminum. Metal oxides can also be utilized, the preferred being aluminum oxide. The metal layer shall have a thickness between 5 and 100 nm, preferably between 20 and 80 nm, more preferably between 30 and 60 nm; and an optical density between 1.5 and 5.0, preferably between 2.0 and 4.0, more preferably between 2.2 and 3.2. The metallized film is then tested for oxygen and moisture gas permeability, optical density, metal adhesion, metal appearance and gloss, heat seal performance, tensile properties, thermal dimensional stability, and can be made into a laminate structure.

This invention will be better understood with reference to the following examples, which are intended to illustrate specific embodiments within the overall scope of the invention.

### Example 1

A 2-layer coextruded biaxially oriented PLA film was made using sequential orientation on a 1.5 meter wide tenter frame line, the film includes a core layer substantially of Natureworks® 4032D at about 96 wt% of the core layer and dry-blended with about 4 wt % of DuPont Biomax® 120 ethylene-acrylate copolymer. The coextruded heat sealable skin layer includes Natureworks® 4060D at about 94 wt% of the skin layer. An antiblock masterbatch of 5µm silica at a loading of 5 wt% of the masterbatch in a carrier resin of amorphous PLA (4060D) was added to the coextruded heat sealable skin layer at about 6 wt% of the skin layer for an effective antiblock loading of 3000 ppm. This antiblock masterbatch was provided by Clariant Oman® b1-698585.

The total thickness of this film substrate after biaxial orientation was ca. 80G or 0.8 mil or 20 µm. The thickness of the respective heat sealable resin layer after biaxial orientation was ca. 6G (1.5 µm). The thickness of the core layer after biaxial orientation was ca. 74G (18.5 µm). The skin layer and the core layer were melt coextruded together at nominal 390°F and 410°F (199°C and 210°C), respectively. The 2-layer co-extrudate was passed through a flat die to be cast on a chill drum of 75°F (24°C) using an electrostatic pinner. The formed cast sheet was passed through a series of heated rolls at 111-136°F (44-58°C) with differential speeds to stretch in the machine direction (MD) at ca. 3.25x stretch ratio. This was followed by transverse direction (TD) stretching at ca. 8.0x stretch ratio in the tenter oven at 160-195°F (71-90.5°C) and heat-set or annealed to reduce film shrinkage effects at ca. 270°F (132°C). The resultant biaxially oriented film was subsequently discharge-treated on the skin layer's surface opposite said heat sealable skin layer via corona treatment. The film was then wound up in roll form.

### Example 2

A process similar to Example 1 was repeated except that the core layer included about 66 wt% of crystalline 4032D, 30 wt% of amorphous PLA 4060D, and 4 wt% of ethylene-acrylate copolymer. The transverse orientation rate obtained was 10.6x.

### Example 3

A process similar to Example 1 was repeated except that the core layer included about 81 wt% of crystalline 4032D, 15 wt% of amorphous PLA 4060D, and 4 wt% of ethylene-acrylate copolymer. The transverse orientation rate obtained was 9.0x.

### Example 4

A process similar to Example 1 was repeated except that the amount of 4032D was 98 wt% of the core and the Biomax® 120 was 2 wt% of the core. The transverse direction orientation obtained was 6.5x .

### Example 5

A process similar to Example 1 was repeated except that the amount of 4032D was 90 wt% of the core and the ethylene-acrylate copolymer was changed to DuPont Elvaloy® PTW at 10 wt% of the core layer. The transverse orientation rate obtained was 8.5x.

### Comparative Example 1

A process similar to Example 1 was repeated except that the amount of 4032D was 100 wt% of the core and no ethylene-acrylate copolymer was added. The transverse orientation rate obtained was 4.6x.

### Comparative Example 2

A process similar to Example 1 was repeated except that the core layer included about 99 wt% of 4032D and 1 wt% of Total Petrochemical's 3576X propylene homopolymer resin of nominal 9.0 g/10min melt flow rate at 230°C. No ethylene-acrylate copolymer was added. The transverse orientation rate obtained was 4.6x.

### Comparative Example 3

A process similar to Example 1 was repeated except that the core layer included about 85 wt% of 4032D and 15wt% of 4060D amorphous PLA. No ethylene-acrylate copolymer was added. The transverse orientation rate obtained was 5.5x.

The unlaminated properties of the Examples ("Ex") and Comparative Examples ("CEx.") are shown in Table 1.

**TABLE 1**

| | Core Layer Composition wt% | | | | | | |
|---|---|---|---|---|---|---|---|
| Sample | 4032D Cryst PLA | Biomax 120 Ethylene-acrylate | Elvaloy PTW Ethylene-acrylate | 4060D Am PLA | 3576X PP | TDX* | Haze % |
| Ex. 1 | 96 | 4 | 0 | 0 | 0 | 8.0 | 6.7 |
| Ex. 2 | 66 | 4 | 0 | 30 | 0 | 10.6 | 7.3 |
| Ex. 3 | 81 | 4 | 0 | 15 | 0 | 9.5 | 6.9 |
| Ex. 4 | 98 | 2 | 0 | 0 | 0 | 6.5 | 5.6 |
| Ex. 5 | 90 | 0 | 10 | 0 | 0 | 8.0 | 7.4 |
| CEx. 1 | 100 | 0 | 0 | 0 | 0 | 4.6 | 2.8 |
| CEx. 2 | 99 | 0 | 0 | 0 | 1 | 4.6 | 30.2 |
| CEx. 3 | 85 | 0 | 0 | 15 | 0 | 5.5 | 3.1 |

| | | | | | | | |
|---|---|---|---|---|---|---|---|
| *Highest TDX achieved before film breakage | | | | | | | |

As Table 1 shows, Comparative Example 1 (CEx.1), which is a control film using crystalline PLA Natureworks® 4032D at 100 wt% of the core layer and substantially amorphous PLA Natureworks® 4060D for sealant layer, had excellent haze appearance (2.8% haze), but the maximum transverse orientation obtained was 4.6x.

Comparative Example 2 (CEx. 2) shows a film that uses about 99 wt% crystalline PLA Natureworks® 4032D and 1 wt% propylene homopolymer Total 3576X blended in the core layer. The sealant layer was substantially amorphous PLA Natureworks® 4060D. This film showed an exceptionally high haze level at 30.2% (probably due to incompatibility between the propylene homopolymer and the PLA). The highest transverse direction orientation obtained was 4.6x.

Comparative Example 3 (CEx. 3) shows a film that uses about 85 wt% crystalline PLA Natureworks® 4032D blended with about 15 wt% amorphous PLA Natureworks® 4060D in the core layer. The sealant layer was substantially amorphous PLA Natureworks® 4060D. Haze was good at 3.1% similar to CEx. 1. The maximum transverse direction orientation obtained was 5.5x, better than CEx. 1 and 2, but still not very high.

The Comparative Examples illustrate that transverse orientation of crystalline PLA films are similar to those achieved in prior arts. Such relatively low TD orientation rates typically necessitate production of such films on either BOPET assets are radically modified BOPP assets.

Examples 1 and 4 (Ex. 1 & 4) use about 4 wt% and 2 wt% respectively of the DuPont Biomax® Strong 120 ethylene-acrylate copolymer blended with about 96 and 98 wt% respectively of crystalline PLA Natureworks® 4032D in the core layer. The sealant layer was substantially amorphous PLA Natureworks® 4060D. Haze appearance was higher than CEx. 1 and 3, but reasonably good and acceptable at 6.7 and 5.6% respectively. This indicates the ethylene-acrylate additive has better compatibility with PLA as compared to using polypropylene in CEx. 2. Transverse orientation obtained with Ex. 1 and 4 is 8.0 and 6.5, substantially better than the Comparative Examples.

Examples 2 and 3 (Ex. 2 & Ex. 3) uses about 4 wt% of the core layer of the Biomax® Strong 120 ethylene-acrylate copolymer blended respectively with 66 wt% crystalline PLA Natureworks® 4032D and 30 wt% of amorphous PLA Natureworks® 4060D or 81 wt% crystalline PLA and 15 wt% amorphous PLA. The sealant layer was substantially amorphous PLA Natureworks® 4060D. Haze continued to be relatively acceptable at around 7%. However, transverse orientation obtained is exceptionally good at 10.6 and 9.5x. These TDX rates are on equivalent to many BOPP orientation rates. It appears that the optional addition of amorphous PLA as part of the core layer can help further increase transverse orientation rates in combination with the ethylene-acrylate copolymer.

Example 5 (Ex. 5) uses about 10 wt% of the core layer of the ethylene-acrylate copolymer DuPont Elvaloy® PTW blended with 90 wt% of crystalline PLA Natureworks® 4032D. The sealant layer was substantially amorphous PLA Natureworks® 4060D. Haze continued to be reasonably acceptable at 7.4%. Transverse orientation obtained was good at 8.0x.

Thus, of the foregoing Examples and Comparative Examples, only the inventive Examples which used an amount of modifying ethylene-acrylate copolymer blended with an amount of crystalline polylactic acid polymer in the core base layer was effective in satisfying the requirements of high transverse orientation rates at the same level as biaxially oriented polypropylene manufacturing and acceptable haze levels.

### Test Methods

The various properties in the above examples were measured by the following methods:
Transparency of the film was measured by measuring the haze of a single sheet of film using a hazemeter model like a BYK Gardner "Haze-Gard Plus®" substantially in accordance with ASTM D1003. Preferred values for haze were 10% maximum or lower.
Transverse orientation obtained was measured by varying the stretching and outlet zones' chain rail widths in relation to the in-feed rail settings of the transverse direction orientation (TDO) oven section. The comparison in width between inlet and stretch was used to calculate TD orientation ratio obtained. The tenter frame line also had to maintain operability for 20 minutes without film breaks. Adjustments to TDO temperatures were allowed to optimize haze level and operability for each variable.

This application discloses several numerical ranges in the text and figures. The numerical ranges disclosed inherently support any range or value within the disclosed numerical ranges even though a precise range limitation is not stated verbatim in the specification because this invention can be practiced throughout the disclosed numerical ranges.

## Claims

1. A biaxially oriented polylactic acid film comprising: a core layer comprising polylactic acid and an ethylene-acrylate copolymer; and a skin layer; wherein the core layer comprises at least 50 wt% polylactic acid.

2. The film of claim 1, wherein the skin layer is coextruded with the core layer.

3. The film of claim 1, wherein the skin layer comprises polylactic acid, preferably at least 50 wt% polylactic acid.

4. The film of claim 1, wherein the core layer comprises polylactic acid having 90-100 wt% L-lactic acid units.

5. The film of claim 1, wherein the skin layer comprises polylactic acid having greater than 10 wt% D-lactic acid units.

6. The film of any previous claim, wherein the skin layer further comprises an ethylene-acrylate copolymer.

7. The film of claim 6, further comprising a heat sealable third layer comprising amorphous polylactic acid with greater than 10 wt% D-lactic acid units.

8. The film of any previous claim, wherein the film has been transverse oriented in excess of 6 times the original width.

9. The film of any previous claim, further comprising a metallized layer.

10. The film of claims 1-4 and 6-9, wherein the core and skin layer comprise crystalline polylactic acid of 90-100 wt% L-lactic acid units.

11. A method of making a multilayer film comprising:
coextruding a core layer comprising polylactic acid and an ethylene-acrylate copolymer, and a skin layer, and further comprising biaxially orienting the film;
wherein the core layer comprises at least 50 wt% polylactic acid.

12. The method of claim 11, further comprising applying a metallized layer onto the skin layer.

## Patentansprüche

1. Biaxial orientierte Polymilchsäurefolie, umfassend:
eine Kernschicht, die Polymilchsäure und ein Ethylen-Acrylat-Copolymer umfasst; und eine Deckschicht; wobei die Kernschicht mindestens 50 Gew.-% Polymilchsäure umfasst.

2. Folie nach Anspruch 1, wobei die Deckschicht mit der Kernschicht coextrudiert ist.

3. Folie nach Anspruch 1, wobei die Deckschicht Polymilchsäure, vorzugsweise mindestens 50 Gew.-% Polymilchsäure, umfasst.

4. Folie nach Anspruch 1, wobei die Kernschicht Polymilchsäure mit 90-100 Gew.-% L-Milchsäure-Einheiten umfasst.

5. Folie nach Anspruch 1, wobei die Deckschicht Polymilchsäure mit mehr als 10 Gew.-% D-Milchsäure-Einheiten umfasst.

6. Folie nach einem der vorhergehenden Ansprüche, wobei die Deckschicht ferner ein Ethylen-Acrylat-Copolymer umfasst.

7. Folie nach Anspruch 6, ferner umfassend eine heißsiegelfähige dritte Schicht, die amorphe Polymilchsäure mit mehr als 10 Gew.-% D-Milchsäure-Einheiten umfasst.

8. Folie nach einem der vorhergehenden Ansprüche, wobei die Folie auf mehr als das 6-fache der ursprünglichen Breite querorientiert worden ist.

9. Folie nach einem der vorhergehenden Ansprüche, ferner umfassend eine metallisierte Schicht.

10. Folie nach den Ansprüchen 1 bis 4 und 6 bis 9, wobei die Kernschicht und die Deckschicht kristalline Polymilchsäure mit 90-100 Gew.-% L-Milchsäure-Einheiten umfassen.

11. Verfahren zur Herstellung einer Mehrschichtfolie, bei dem man:
eine Kernschicht, die Polymilchsäure und ein Ethylen-Acrylat-Copolymer umfasst, und eine Deckschicht coextrudiert
und ferner die Folie biaxial orientiert;
wobei die Kernschicht mindestens 50 Gew.-% Polymilchsäure umfasst.

12. Verfahren nach Anspruch 11, bei dem man ferner eine metallisierte Schicht auf die Deckschicht aufbringt.

## Revendications

1. Film à base d'acide polylactique d'orientation biaxiale comprenant :
une couche centrale comprenant de l'acide polylactique et un copolymère d'éthylène-acrylate ; et une couche superficielle ; dans lequel la couche centrale comprend au moins 50 % en poids d'acide polylactique.

2. Film selon la revendication 1, dans lequel la couche superficielle est coextrudée avec la couche centrale.

3. Film selon la revendication 1, dans lequel la couche superficielle comprend de l'acide polylactique, de préférence au moins 50 % en poids d'acide polylactique.

4. Film selon la revendication 1, dans lequel la couche centrale comprend de l'acide polylactique comportant de 90 à 100 % en poids d'unités acide L-lactique.

5. Film selon la revendication 1, dans lequel la couche superficielle comprend de l'acide polylactique comportant plus de 10 % en poids d'unités acide D-lactique.

6. Film selon l'une quelconque des revendications précédentes, dans lequel la couche superficielle comprend en outre un copolymère d'éthylène-acrylate.

7. Film selon la revendication 6, comprenant en outre une troisième couche pour scellage à chaud comprenant de l'acide polylactique amorphe comportant plus de 10 % en poids d'unités acide D-lactique.

8. Film selon l'une quelconque des revendications précédentes, dans lequel le film a été orienté dans la direction transversale plus de 6 fois la largeur d'origine.

9. Film selon l'une quelconque des revendications précédentes, comprenant en outre une couche métallisée.

10. Film selon les revendications 1 à 4 et 6 à 9, dans lequel les couches centrale et superficielle comprennent de l'acide polylactique cristallin comportant 90 à 100 % en poids d'unités acide L-lactique.

11. Procédé de préparation d'un film multicouche comprenant :
la coextrusion d'une couche centrale comprenant de l'acide polylactique et un copolymère d'éthylène-acrylate, et d'une couche superficielle, et
comprenant en outre l'orientation biaxiale du film ; dans lequel la couche centrale comprend au moins 50 % en poids d'acide polylactique.

12. Procédé selon la revendication 11, comprenant en outre l'application d'une couche métallisée sur la couche superficielle.
